# EUROPÄISCHE PATENTSCHRIFT

(11) **EP 1 970 680 B1**
(45) Veröffentlichungstag und Bekanntmachung des Hinweises auf die Patenterteilung: **27.04.2022**
(21) Anmeldenummer: 08003972.0
(22) Anmeldetag: 04.03.2008
(51) Int. Cl.: G01F 23/292, G01N 35/10

(54) **Optisches Sensorsystem für eine Vorrichtung zur Behandlung von Flüssigkeiten**
Optical sensor system for a fluid treatment device
Système de détection optique pour un dispositif de traitement de liquides

(30) Priorität: 13.03.2007 DE 102007011877
(43) Veröffentlichungstag der Anmeldung: 17.09.2008
(73) Patentinhaber: EPPENDORF AG, 22339 Hamburg (DE)
(72) Erfinder: Götz, Reinhold, 22395 Hamburg (DE); Harnack, Kurt, 22889 Tangstedt (DE); Knofe, Helmut, 22844 Norderstedt (DE); Kroog, Jens-Peter, 22927 Großhansdorf (DE); Scheffler, Peter, 22399 Hamburg (DE)
(74) Vertreter: Hauck Patentanwaltspartnerschaft mbB

(56) Entgegenhaltungen:
- WO-A1-00/42384
- DE-A1- 19 924 259
- US-A- 5 973 770
- US-B1- 6 388 750

## Beschreibung

Die Erfindung bezieht sich auf ein Verfahren zur Ermittlung der Lage einer Grenzfläche einer Flüssigkeit in einem Gefäß.

Ein optisches Sensorsystem der erfindungsgemäßen Art dient z.B. der Bestimmung der Höhe eines Flüssigkeitsspiegels in Gefäßen (z.B. Reaktionsgefäßen oder Aufnahmen von Mikrotiterplatten), der Lage und Identität von Gefäßen (z.B. Reaktionsgefäßen oder Mikrotiterplatten) und der Lage und der Identität von Gegenständen (z.B. Werkzeugen, Zubehör, Pipettenspitzen in einem Gestell und anderer sogenannter "Labware") in einer Vorrichtung zur Behandlung von Flüssigkeiten.

Eine Vorrichtung zur Behandlung von Flüssigkeiten kann insbesondere eine Vorrichtung zum Dosieren und/oder Transportieren und/oder Untersuchen und/oder Bearbeiten (z.B. chemisch, physikalisch oder biologisch) von Flüssigkeiten sein. Bei bekannten Vorrichtungen zur Behandlung von Flüssigkeiten werden die Abläufe entweder manuell oder zum Teil oder vollständig automatisch durchgeführt. So sind beispielsweise für das Dosieren manuelle Pipetten, PC-unterstützte Dosiersysteme und vollautomatische Dosierstationen bekannt. Für das Dosieren, Transportieren, Untersuchen und Bearbeiten von Flüssigkeiten gibt es vollautomatische Behandlungsstationen (sogenannte "Workstations").

Sowohl beim manuellen als auch beim automatischen Pipettieren muß bei der Flüssigkeitsaufnahme die Pipettenspitze mit möglichst geringer Eintauchtiefe in die Flüssigkeit eingetaucht werden, weil der Dosierfehler mit der Eintauchtiefe steigt und bei einem zu tiefen Eintauchen die Pipettenspitze bzw. das Gefäß beschädigt werden können. Außerdem muß die Pipettenspitze während der Flüssigkeitsaufnahme fortwährend eintauchen, damit keine Luft eingesogen wird. Dabei ist zu berücksichtigen, daß der Flüssigkeitsspiegel im Gefäß bei der Flüssigkeitsaufnahme sinkt. Bei manuellen Pipetten muß der Benutzer ständig die Eintauchtiefe der Pipettenspitze kontrollieren und die Pipettenspitze nachführen. Bei automatischen Dosiervorrichtungen werden hierfür Überwachungs- und Steuereinrichtungen eingesetzt.

Aus der EP 1 288 635 A2 ist eine Vorrichtung zur Behandlung von Flüssigkeiten mit einer Beleuchtungseinrichtung zum Beleuchten einer etwa punktförmigen Beleuchtungsstelle im Raum und einer etwa punktförmigen Lichtempfangseinrichtung mit einem Fotodetektor zum Liefern eines von der Intensität des empfangenen Lichtes abhängigen Meßsignales bekannt. Die Vorrichtung weist ein abbildendes System zum Abbilden der Beleuchtungsstelle auf die etwa punktförmige Lichtempfangseinrichtung auf. Ferner hat sie eine Auswerteeinrichtung zum Erfassen der Annäherung einer Grenzfläche zwischen zwei Medien mit unterschiedlichen Brechzahlen an die Beleuchtungsstelle durch Auswerten der vom Fotodetektor gelieferten Meßsignale. Wenn eine Grenzfläche zwischen zwei Medien mit unterschiedlichen Brechzahlen in die Beleuchtungsstelle eintritt, ändert sich die Intensität der von der Lichtempfangseinrichtung empfangenen Lichtstrahlung und damit das vom Fotodetektor gelieferte Meßsignal stark. Somit ist feststellbar, ob sich eine Grenzfläche in der Beleuchtungsstelle befindet oder nicht.

Da der Lichtstrahl der Beleuchtungseinrichtung und das abbildende System koaxial auf die Beleuchtungsstelle ausgerichtet werden können, ist ein berührungsloses Erfassen von Grenzschichten aus größerer Distanz und unter geringem seitlichem Raumbedarf möglich. Dies begünstigt das Erfassen des Flüssigkeitsspiegels in Gefäßen mit verhältnismäßig kleiner Öffnung und/oder verhältnismäßig großer Tiefe.

Es kann gezielt mit Licht einer Wellenlänge gearbeitet werden, für die eine Flüssigkeit (z.B. Wasser) undurchsichtig ist, um einen Flüssigkeitsspiegel frei von Störungen durch nahe Gefäße zu erfassen.

Für die Bestimmung der Lage einer Grenzfläche kann die relative Lage von Beleuchtungsstelle und Grenzfläche verändert werden, bis sich die Grenzfläche in der Beleuchtungsstelle befindet. Ferner ist es möglich, die Oberfläche eines Objektes mit der Beleuchtungsstelle abzutasten, um aufgrund einzelner Werte oder des Verlaufs des Meßsignals auf die Lage des gesamten Objektes und/oder seine Identität zu schließen. Hierfür kann die Vorrichtung eine Verstelleinrichtung zum Verstellen der relativen Lage von Beleuchtungsstelle und Grenzfläche in Richtung der optischen Achse des abbildenden Systems und/oder quer dazu aufweisen. Die Auswerteeinrichtung kann das Verstellen der relativen Lage von Beleuchtungsstelle und Grenzfläche durch die Verstelleinrichtung steuern. Dann kann das Verstellen in Abhängigkeit von Meßsignalen erfolgen, beispielsweise um die Beleuchtungsstelle auf die Grenzfläche einzustellen und/oder entlang der Grenzfläche zu verfahren.

Für die Positionierung des Beleuchtungspunktes auf der Grenzfläche bzw. das Auffinden der Grenzfläche muß die Verstelleinrichtung vielfach lange Verfahrwege zurücklegen. Dieses kostet viel Zeit und mindert die Arbeitsgeschwindigkeit der Vorrichtung zur Behandlung von Flüssigkeit.

Die DE 199 24 259 A1 beschreibt eine Vorrichtung und Verfahren zur Erfassung des Füllstandes eines Flüssigkeitsbehälters, wobei Licht aus einer Lichtquelle durch eine Linse in paralleles Licht umgewandelt wird, das nach Durchlaufen eines Strahlteilers in einzelne Kammern einer Titerplatte eindringt und entweder am Boden der einzelnen Kammern oder an einer Flüssigkeitsoberfläche in einer mit Flüssigkeit gefüllten Kammer reflektiert wird. Die Lage des Bodens oder der Flüssigkeitsoberfläche wird dadurch festgestellt, dass durch Verändern der Länge eines Abschnittes des Strahlenganges entweder der Boden mit geringer Intensität scharf auf der Aufnahmevorrichtung abgebildet wird oder mit maximaler Intensität als Lichtpunkt die Oberfläche der in den Kammern vorhandenen Flüssigkeit scharf abgebildet wird. Dabei wird ausgenutzt, dass das einfallende parallele Licht an der Flüssigkeitsoberfläche gebeugt und in einem Brennpunkt gebildet wird. Zum Verändern der Länge eines Abschnittes des Strahlenganges wird die Titerplatte oder die gesamte optische Anordnung angehoben oder abgesenkt.

Die WO 00/42384 A1 beschreibt ein System zur Detektion eines Flüssigkeitsspiegels mit einer Lichtquelle und einem Fotodetektor. Die Lichtquelle erzeugt einen Strahl mit einem festen Winkel, den der Fotodetektor detektiert, wenn er von der Flüssigkeitsoberfläche reflektiert wird. Der Output des Fotodetektors variiert in Abhängigkeit von der Stärke der auf ihn auftreffenden reflektierten Strahlung. Ferner variiert der Output mit dem Abstand zwischen der Flüssigkeitsoberfläche, der Lichtquelle und dem Fotodetektor. Das System kann beispielsweise zum automatischen Pipettieren benutzt werden, wobei die Lage einer Pipettenspitze bezüglich einer Flüssigkeit in einem Gefäß festgestellt werden muss, um die Flüssigkeit sicher und wirksam zu verarbeiten, ohne dass die Pipettenspitze das Gefäß berührt.

Davon ausgehend liegt der Erfindung die Aufgabe zugrunde, ein Verfahren zur Ermittlung der Lage einer Grenzfläche einer Flüssigkeit in einem Gefäß zur Verfügung zu stellen, das eine schnellere Detektion von Grenzflächen ermöglicht.

Die Aufgabe wird durch ein Verfahren mit den Merkmalen von Anspruch 1 gelöst. Ferner wird die Aufgabe durch ein Verfahren mit dem Merkmal von Anspruch 2 gelöst. Schließlich wird die Aufgabe durch ein Verfahren mit den Merkmalen von Anspruch 3 gelöst. Vorteilhafte Ausgestaltungen der Verfahrensind in den Unteransprüchen angegeben.

Gemäß Anspruch 1 umfasst das Verfahren zur Ermittlung der Lage einer Grenzfläche einer Flüssigkeit in einem Gefäß die folgenden Schritte:
- Projizieren von Licht auf mindestens eine Beleuchtungsstelle,
- Abbilden der mindestens einen Beleuchtungsstelle auf mindestens einen Fotodetektor,
- Verändern des vertikalen Abstands der mindestens einen Beleuchtungsstelle und der Grenzfläche im Gefäß,
- Ermitteln des Maximums des Messsignals des mindestens einen Fotodetektors beim Verändern des vertikalen Abstands,
- Bestimmen der Lage der Beleuchtungsstelle beim Maximum des Messsignals als Lage der Grenzfläche
gekennzeichnet durch:
- Projizieren von Licht mindestens einer Lichtquelle gleichzeitig auf mehrere punktförmige Beleuchtungsstellen, die verschiedene Positionen im Raum haben, wobei die Beleuchtungsstellen eine dreidimensionale Anordnung oder eine Anordnung in einer Fläche haben,
- Ermitteln des Maximums des Messsignals mindestens eines Fotodetektors beim Verändern des vertikalen Abstandes zwischen den mehreren punktförmigen Beleuchtungsstellen und der Grenzfläche.

Gemäß Anspruch 2 umfasst das Verfahren zur Ermittlung der Lage einer Grenzfläche einer Flüssigkeit in einem Gefäß die folgenden Schritte:
- Projizieren von Licht auf mindestens eine Beleuchtungsstelle,
- Abbilden der mindestens einen Beleuchtungsstelle auf mindestens einen Fotodetektor,
- Verändern des vertikalen Abstands der mindestens einen Beleuchtungsstelle und der Grenzfläche im Gefäß,
- Ermitteln des Maximums des Messsignals des mindestens einen Fotodetektors beim Verändern des vertikalen Abstands,
- Bestimmen der Lage der Beleuchtungsstelle beim Maximum des Messsignals als Lage der Grenzfläche
gekennzeichnet durch:
- auf mindestens eine punktförmige Beleuchtungsstelle wird Licht mehrerer Lichtquellen unter verschiedenen Winkeln projiziert,
- Ermitteln des Maximums des Messsignals mindestens eines Fotodetektors beim Verändern des vertikalen Abstandes zwischen der mindestens einen punktförmigen Beleuchtungsstelle und der Grenzfläche.

Gemäß Anspruch 3 umfasst das Verfahren zur Ermittlung der Lage einer Grenzfläche einer Flüssigkeit in einem Gefäß die folgenden Schritte:
- Projizieren von Licht auf mindestens eine Beleuchtungsstelle,
- Abbilden der mindestens einen Beleuchtungsstelle auf mindestens einen Photodetektor,
- Verändern des vertikalen Abstands der mindestens einen Beleuchtungsstelle und der Grenzfläche im Gefäß,
- Ermitteln des Maximums des Messsignals des mindestens einen Fotodetektors beim Verändern des vertikalen Abstands,
- Bestimmen der Lage der Beleuchtungsstelle beim Maximum des Messsignals als Lage der Grenzfläche
gekennzeichnet durch:
- die mindestens eine punktförmige Beleuchtungsstelle wird auf mehrere Fotodetektoren, die verschiedene Positionen im Raum haben, abgebildet,
- Ermitteln des Maximums des Messsignals der Fotodetektoren beim Verändern des vertikalen Abstandes zwischen der mindestens einen punktförmigen Beleuchtungsstelle und der Grenzfläche.

Der Erfindung liegen insbesondere folgende Erkenntnisse zugrunde: Das optische Sensorsystem der Vorrichtung zur Behandlung von Flüssigkeiten gemäß EP 1 288 635 A2 ist darauf angewiesen, daß die Beleuchtungseinrichtung, die Lichtempfangseinrichtung und die Grenzfläche so zueinander ausgerichtet sind, daß Licht aus der Beleuchtungsstelle auf der Grenzfläche genau auf die punktförmige Lichtempfangseinrichtung reflektiert wird. Bei koaxialer Ausrichtung der Beleuchtungseinrichtung und des abbildenden Systems auf die Beleuchtungsstelle müssen die Beleuchtungseinrichtung und das abbildende System senkrecht auf die Grenzfläche gerichtet sein, damit das Licht aus der punktförmigen Beleuchtungsstelle auf die punktförmige Lichtempfangseinrichtung reflektiert wird. Ab einem bestimmten Winkel der Neigung der Grenzfläche zur Achse der Beleuchtungseinrichtung trifft das reflektierte Licht nicht mehr auf die Lichtempfangseinrichtung. Damit wird diese geneigte Grenzfläche von dem optischen Sensorsystem nicht detektiert.

In Gefäßen bilden sich die Oberflächen von Flüssigkeiten unterschiedlich aus, insbesondere in Gefäßen mit kleinen Abmessungen, wie Reaktionsgefäßen und Vertiefungen von Mikrotiterplatten. Die Formen dieser Grenzflächen werden insbesondere durch Gravitation, Dimensionen der Gefäße, Einfüllart der Flüssigkeit, Oberflächenspannung der Flüssigkeit, Benetzungseigenschaften der Wandungen der Gefäße und weitere vielschichtige Einflüsse bestimmt, die eine Vorhersage der optimalen Reflexionsstelle nicht erlauben, in der die Beleuchtungseinrichtung und das abbildende System senkrecht auf die Grenzfläche ausgerichtet sind.

Die optimale Reflexionsstelle kann insbesondere bei ebenen Flüssigkeitsoberflächen in relativ großen Gefäßen großflächig und insbesondere bei relativ unebenen Flüssigkeitsoberflächen in kleinen Gefäßen kleinflächig sein. Gerade bei von Hand pipettierten Flüssigkeitsproben kann die Flüssigkeitsoberfläche schräg stehen, da die Flüssigkeit bevorzugt an der Wandung des Gefäßes abgegeben wird. Dadurch kann die optimale Reflexionsstelle weit außermittig liegen.

Das bekannte optische Sensorsystem muß gegebenenfalls mehrfach horizontal und vertikal verfahren werden, bis die optimale Reflexionsstelle aufgefunden wird. Dementsprechend kann die Detektion der Grenzfläche lange Verfahrwege erfordern und ist der Zeitbedarf entsprechend hoch.

Das erfindungsgemäße Verfahren ist geeignet zum Betreiben eines optischen Sensorsystems, das gleichzeitig mehrere Beleuchtungsstellen aufweist und/oder gleichzeitig dieselbe Beleuchtungsstelle unter verschiedenen Winkeln beleuchtet und/oder mehrere Fotodetektoren aufweist, die gleichzeitig Licht empfangen können und ein vom empfangenen Licht abhängiges Meßsignal liefern. Mehrere Beleuchtungsstellen bzw. mehreren Fotodetektoren haben verschiedene Positionen im Raum. Mehrere Beleuchtungsstellen können somit gleichzeitig einen größeren Bereich der zu detektierenden Grenzfläche beleuchten. Bei Beleuchtung einer Beleuchtungsstelle unter verschiedenen Winkeln wird das Licht unter verschiedenen Winkeln von der zu detektierenden Grenzfläche reflektiert. Mehrere Fotodetektoren können Licht empfangen, das von der Grenzfläche unter verschiedenen Winkeln abgestrahlt wird. Bei allen vorgenannten Varianten ist die Wahrscheinlichkeit erhöht, bei einer bestimmten Anordnung der Einrichtung zum Projizieren und der Einrichtung zum Abbilden bezüglich der zu detektierenden Grenzfläche eine optimale Reflexionsstelle zu finden, in der auf eine Beleuchtungsstelle projiziertes Licht so von der Grenzfläche reflektiert wird, daß es auf mindestens einen Fotodetektor trifft. Dieser liefert ein entsprechendes Meßsignal, so daß die Auswerteeinrichtung die Anordnung der Grenzfläche in der Beleuchtungsstelle feststellen kann.

Infolgedessen ist es möglich, daß sich ein Verfahren des optischen Sensorsystems bezüglich der Grenzfläche erübrigt. Sofern ein Verfahren des optischen Sensorsystems bezüglich der Grenzfläche erforderlich ist, weil nicht sogleich eine optimale Reflexionsstelle festgestellt wird, kann das optische Sensorsystem bezüglich der Grenzfläche verfahren werden, bis die Auswerteeinrichtung durch Auswerten der Meßsignale feststellt, daß sich eine optimale Reflexionsstelle der Grenzfläche in einer Beleuchtungsstelle befindet. Die Verfahrwege für das Auffinden der optimalen Reflexionsstelle können reduziert werden. Hierdurch wird eine schnellere Detektion der Grenzfläche ermöglicht und kann die Arbeitsgeschwindigkeit einer Vorrichtung zur Behandlung von Flüssigkeiten gesteigert werden.

Die genannten vorteilhaften Wirkungen werden insbesondere erreicht, wenn die Einrichtung zum Projizieren das Licht gleichzeitig auf mehrere Beleuchtungsstellen projiziert und/oder das Licht gleichzeitig unter verschiedenen Winkeln auf dieselbe Beleuchtungsstelle projiziert und nur ein einziger Fotodetektor vorhanden ist. Ferner werden sie erreicht, wenn die Einrichtung zum Projizieren nur eine Beleuchtungsstelle unter nur einem Winkel beleuchtet und mehrere Fotodetektoren vorhanden sind. In besonders vorteilhafter Weise werden sie erreicht, wenn die Einrichtung zum Projizieren gleichzeitig mehrere Beleuchtungsstellen beleuchtet und/oder dieselbe Beleuchtungsstelle gleichzeitig unter verschiedenen Winkeln beleuchtet und mehrere Fotodetektoren vorhanden sind.

Das optische Sensorsystem kann verschiedene Arten von Grenzflächen detektieren, insbesondere Flüssigkeiten oder Gegenstände, insbesondere mit diffus oder gerichtet reflektierenden Grenzflächen. Damit kann es insbesondere für die Ermittlung der Lage und/oder Identität von Grenzflächen bzw. der diese aufweisenden Flüssigkeiten oder Gegenstände verwendet werden. Die Einrichtung zum Projizieren kann grundsätzlich das Licht einer fremden Lichtquelle projizieren. Gemäß einer Ausgestaltung weist die Einrichtung zum Projizieren mindestens eine eigene Lichtquelle auf. Gemäß einer weiteren Ausgestaltung ist die Lichtquelle mindestens ein Laser, eine LED oder ein Glühlämpchen. Der Laser ist beispielsweise ein Halbleiterlaser, insbesondere eine Laserdiode.

Falls die Einrichtung zum Projizieren mehrere Lichtquellen aufweist, kann das Licht verschiedener Lichtquellen absolut gleichzeitig auf verschiedene Beleuchtungsstellen projiziert und/oder gleichzeitig unter verschiedenen Winkeln auf dieselbe Beleuchtungsstelle projiziert werden. Die Erfindung bezieht jedoch auch Ausführungen ein, bei denen das Licht verschiedener Lichtquellen zeitversetzt auf mehrere Beleuchtungsstellen projiziert und/oder zeitversetzt unter verschiedenen Winkeln auf dieselbe Beleuchtungsstelle projiziert wird, so daß zu einem bestimmten Zeitpunkt nur eine Lichtquelle eingeschaltet ist. Diese Ausführungen ermöglichen ebenfalls eine schnellere Detektion der Grenzfläche, insbesondere, wenn die Lichtquellen in sehr schneller Folge eingeschaltet werden, weil hierdurch die Grenzfläche sehr viel schneller abgetastet werden kann, als durch Verlagern des bekannten einstrahligen Sensorsystems mittels der Verstelleinrichtung. Das aufeinanderfolgende Einschalten der Lichtquellen kann hilfreich sein, die Meßsignale den verschiedenen Lichtquellen zuzuordnen. Mehrere nacheinander eingeschaltete Lichtquellen beleuchten deshalb die verschiedenen Beleuchtungsstellen quasi gleichzeitig bzw. beleuchten eine Beleuchtungsstelle unter verschiedenen Winkeln quasi gleichzeitig und werden daher im Sinne der Erfindung gleichzeitig eingeschaltet.

Gemäß einer Ausgestaltung gibt die Lichtquelle Licht mit einer Wellenlänge ab, das in besonders starkem Maße von einer zu detektierenden Grenzfläche reflektiert wird. Dementsprechend kann für die Detektion der Oberfläche einer Flüssigkeit Licht mit einer anderen Wellenlänge als für die Detektion der Oberfläche eines Gegenstandes verwendet werden. Falls mit Licht einer Wellenlänge gearbeitet wird, für das die Flüssigkeit undurchsichtig ist, kann der Flüssigkeitsspiegel frei von Störungen durch nahe Gefäßwände erfaßt werden. Ist die Flüssigkeit für Licht einer bestimmten Wellenlänge durchsichtig, kann mit diesem Licht durch die Flüssigkeit hindurch die Lage eines Gefäßbodens ermittelt werden. Die geeignete Wellenlänge für die Detektion einer Flüssigkeit kann von deren Zusammensetzung (z.B. wäßrige oder organische Lösung) abhängig sein. Die geeignete Wellenlänge für die Detektion der Oberfläche eines Gegenstandes kann davon abhängig sein, aus welchem Material (z.B. Metall oder Kunststoff) mit welcher Beschaffenheit (transparent, reflektierend, glänzend, matt etc.) dieser besteht. In Betracht kommen Wellenlängen in einem weiten Bereich, der sichtbares und unsichtbares Licht (IR- und UV-Strahlung) einschließt. Insbesondere für den Bereich des sichtbaren Lichtes stehen Laserdioden zur Verfügung.

Gemäß einer Ausgestaltung weist die Einrichtung zum Projizieren mehrere Lichtquellen mit verschiedener Wellenlänge auf, die in Abhängigkeit von der zu detektierenden Grenzfläche eingeschaltet werden können. Gemäß einer anderen Ausgestaltung weist die Einrichtung zum Projizieren eine Lichtquelle mit einstellbarer Wellenlänge auf (z.B. eine durchstimmbare Laserdiode).

Diese Ausgestaltungen ermöglichen, eine Grenzfläche mit Licht verschiedener Wellenlängen zu detektieren. Ungültige Messwerte können nach Überprüfung der Messung mit Licht einer anderen Wellenlänge erkannt und verworfen werden. Insbesondere wenn in einem Gefäß eine nur sehr kleine Flüssigkeitsmenge enthalten ist, ist es wichtig, zwischen der Oberfläche der Flüssigkeit und dem Boden des Gefäßes zu unterscheiden. Bei Messung mit Licht nur einer Wellenlänge kann dies sehr schwierig sein. Der Einsatz von Licht mit verschiedenen Wellenlängen erleichtert die Zuordnung, insbesondere wenn die Wellenlänge je nach Messfall und Material optimiert wird.

Die Einrichtung zum Projizieren ist eine Einrichtung zum Projizieren von Licht auf mindestens eine punktförmige Beleuchtungsstelle. Die punktförmige Beleuchtungsstelle ist insbesondere vorteilhaft für das Detektieren kleiner Grenzflächen, z.B. von Flüssigkeitsspiegeln in engen Gefäßen oder in den Aufnahmen von Mikrotiterplatten. Außerdem werden bei Fokussierung des Lichts auf mindestens eine punktförmige Beleuchtungsstelle besonders starke Meßsignale erhalten, wenn eine punktförmige Beleuchtungsstelle auf eine optimale Reflexionsstelle trifft. Zum Erzeugen einer punktförmigen Beleuchtungsstelle ist gemäß einer Ausgestaltung die mindestens eine Lichtquelle punktförmig. Nach einer weiteren Ausgestaltung weist die Einrichtung zum Projizieren im Strahlengang der mindestens einen Lichtquelle mindestens eine Blende und/oder mindestens einen Lichtleiter auf, so daß an der Lichtaustrittsseite der Blende bzw. des Lichtleiters eine gleichsam punktförmige Lichtquelle vorhanden ist.

Die Beleuchtungsstellen können verschiedene Anordnungen im Raum haben. Sie haben eine dreidimensionale Anordnung oder eine Anordnung in einer Fläche. Gemäß einer weiteren Ausgestaltung ist die Fläche eine Ebene. Gemäß einer anderen Ausgestaltung sind die Beleuchtungsstellen in einer konvexen oder konkaven Fläche oder in zueinander geneigten Flächen angeordnet. Diese Ausgestaltungen nähern charakteristische Formen von Grenzflächen (z.B. von Flüssigkeitsoberflächen in engen Gefäßen) an und können deshalb das Auffinden einer optimalen Reflexionsstelle erleichtern.

Bei einer dreidimensionalen Anordnung können die Beleuchtungsstellen insbesondere auf den Schnittpunkten eines Raumgitters angeordnet sein. Bei einer Anordnung in einer Fläche können sie insbesondere auf den Schnittpunkten eines flächigen Gitternetzes (bzw. rasterartig) oder in anderen Mustern angeordnet sein.

Mehrere verschiedene Beleuchtungsstellen können insbesondere voneinander getrennte bzw. diskrete Beleuchtungsstellen sein. Sie können aber auch einander berühren oder einander teilweise überdecken.

Nach einer Ausgestaltung hat der die mindestens eine Beleuchtungsstelle beleuchtende Lichtstrahl einen Aperturwinkel von 8° oder darunter, so daß der Lichtstrahl ohne Abblendung im Randbereich in Gefäße mit verhältnismäßig kleinem Öffnungsdurchmesser und/oder großer Tiefe einführbar ist. Dieses können insbesondere Gefäße mit einem Füllvolumen im mL-Bereich und darunter sein, die vielfach für die Aufnahme von Flüssigkeiten in Dosierstationen und vollautomatischen Behandlungsstationen verwendet werden.

Nach einer Ausgestaltung beträgt der Abstand der Beleuchtungsstelle von dem abbildenden System 100 mm oder mehr, wodurch eine berührungslose Messung des Flüssigkeitsspiegels in vielen gebräuchlichen Gefäßen vorstehender Art möglich ist.

Gemäß einer Ausgestaltung weist die Einrichtung zum Projizieren eine einzige Lichtquelle und mindestens eine Einrichtung zum Abbilden der Lichtquelle auf mindestens eine Beleuchtungsstelle auf. Diese Einrichtung zum Projizieren kann insbesondere eine einzige Beleuchtungsstelle beleuchten. Zum gleichzeitigen Projizieren von Licht auf mehrere verschiedene Beleuchtungsstellen und/oder zum gleichzeitigen Projizieren von Licht auf dieselbe Beleuchtungsstelle unter verschiedenen Winkeln weist gemäß einer Ausgestaltung die Einrichtung zum Projizieren eine Einrichtung zum Aufteilen der Lichtquelle auf mehrere virtuelle Lichtquellen und mindestens eine Einrichtung zum Abbilden der mehreren virtuelle Lichtquellen auf mindestens eine Beleuchtungsstelle auf.

Gemäß einer Ausgestaltung umfaßt die Einrichtung zum Aufteilen der Lichtquelle einen sich auffächernden Lichtleiter und/oder eine Mehrlochblende. Der sich auffächernde Lichtleiter wendet das nicht aufgefächerte Ende der Lichtquelle und das aufgefächerte Ende der Einrichtung zum Abbilden zu. Die virtuellen Lichtquellen befinden sich am aufgefächerten Ende des aufgefächerten Lichtleiters. Die Mehrlochblende ist im Strahlengang zwischen der Lichtquelle und der Einrichtung zum Abbilden angeordnet. Die mehreren virtuellen Lichtquellen sind durch die Blendenöffnungen der Mehrlochblende definiert.

Gemäß einer anderen Ausgestaltung umfaßt die Einrichtung zum Projizieren mehrere Lichtquellen und mindestens eine Einrichtung zum Abbilden der mehreren Lichtquellen auf mindestens eine Beleuchtungsstelle. Bei dieser Ausgestaltung wird das Licht mehrerer Lichtquellen zum gleichzeitigen Projizieren von Licht auf mehrere Beleuchtungsstellen und/oder zum gleichzeitigen Projizieren von Licht auf dieselbe Beleuchtungsstelle unter verschiedenen Winkeln herangezogen.

Gemäß einer weiteren Ausgestaltung weist die Einrichtung zum Projizieren eine gemeinsame Einrichtung zum Abbilden der mehreren virtuellen Lichtquellen oder der mehreren Lichtquellen auf mindestens eine Beleuchtungsstelle auf.

Gemäß einer Ausgestaltung ist der mindestens eine Fotodetektor punktförmig, linienförmig oder flächig. Der mindestens eine Fotodetektor kann beispielsweise eine Fotodiode, eine Fotodiodenzeile, eine Fotodiodenmatrix oder ein Flächenfotodetektor sein. Vorzugsweise entspricht die Form des Fotodetektors der Form der Beleuchtungsstelle, die auf den Fotodetektor abgebildet wird. Vorzugsweise wird also eine punktförmige Beleuchtungsstelle auf einen punktförmigen Fotodetektor abgebildet.

Die Fotodetektoren können verschiedene Anordnungen im Raum haben, beispielsweise eine dreidimensionale Anordnung oder eine Anordnung in einer Fläche. Die Fläche kann insbesondere eine Ebene sein. Die Fotodetektoren können insbesondere auf den Schnittpunkten eines Raumgitters oder eines flächigen Gitternetzes (bzw. rasterartig) oder in anderen Mustern angeordnet sein. Bevorzugt entspricht die Anordnung der Fotodetektoren der Anordnung der Beleuchtungsstellen, wobei jede Beleuchtungsstelle auf einen dieser zugeordneten Fotodetektor abgebildet wird. So sind beispielsweise die Beleuchtungsstellen und die Fotodetektoren jeweils auf den Schnittpunkten eines Raumgitters oder eines flächigen Gitternetzes angeordnet, wobei die Abstände der Beleuchtungsstellen voneinander den Abständen der Fotodetektoren voneinander entsprechen.

Die Abstände der Beleuchtungsstellen und/oder der Fotodetektoren voneinander liegen beispielsweise im Bereich von einem Zehntel Millimeter bis zu einigen Millimetern.

Die mehreren Fotodetektoren können insbesondere voneinander getrennte bzw. diskrete Fotodetektoren sein oder einander berühren. Mehrere Fotodetektoren können verschiedene Bauteile oder Teile eines einzigen Bauteils sein.

Ein punktförmiger Fotodetektor kann ein Fotodetektor mit einer besonders kleinen lichtempfindlichen Fläche sein. Nach einer Ausgestaltung ist im Strahlengang zwischen der mindestens einen Einrichtung zum Abbilden und dem mindestens einen Fotodetektor mindestens eine Blende und/oder mindestens ein Lichtleiter angeordnet. Die Blende bzw. der Lichtleiter begrenzt den Lichtdurchgang auf einen punktförmigen Bereich der lichtempfindlichen Fläche des Fotodetektors, so daß ein gleichsam punktförmiger Fotodetektor erhalten wird.

Gemäß einer Ausgestaltung ist ein einziger Fotodetektor und mindestens eine Einrichtung zum Abbilden mindestens einer Beleuchtungsstelle auf den Fotodetektor vorhanden. Bevorzugt bildet die mindestens eine Einrichtung zum Abbilden mehrere Beleuchtungsstellen auf den einzigen Fotodetektor ab, um das Auffinden einer optimalen Reflexionsstelle zu erleichtern. Einbezogen sind aber auch Ausführungen, bei denen die Einrichtung zum Abbilden nur eine Beleuchtungsstelle auf den Fotodetektor abbildet, auf die Licht unter verschiedenen Winkeln projiziert wird, um Licht unter einem Einfallswinkel auf die Beleuchtungsstelle zu projizieren, für den die Reflexionsstelle optimal ist.

Gemäß einer Ausgestaltung ist zwischen der mindestens einen Einrichtung zum Abbilden und dem Fotodetektor eine Einrichtung zum Zusammenführen von Licht angeordnet. Die Einrichtung zum Zusammenführen hat mehrere Eingänge, durch die Licht eintreten kann. In der Einrichtung zum Zusammenführen wird das eingetretene Licht zusammengeführt und durch einen gemeinsamen Ausgang dem Fotodetektor zugeführt. Gemäß einer weiteren Ausgestaltung weist die Einrichtung zum Zusammenführen von Licht sich vereinigende Lichtleiter auf.

Gemäß einer Ausgestaltung sind mehrere Fotodetektoren und mindestens eine Einrichtung zum Abbilden mindestens einer Beleuchtungsstelle auf mehrere Fotodetektoren vorhanden. Durch die mehreren Fotodetektoren ist die Wahrscheinlichkeit erhöht, reflektiertes Licht aus einer einzigen Beleuchtungsstelle zu empfangen. Sind mehrere Beleuchtungsstellen vorhanden, ist durch die mehreren Fotodetektoren die Wahrscheinlichkeit erhöht, reflektiertes Licht aus mindestens einer Beleuchtungsstelle zu empfangen.

Gemäß einer Ausgestaltung sind die Einrichtungen zum Projizieren und die mindestens eine Einrichtung zum Abbilden koaxial angeordnet. Hierdurch wird eine Erfassung von Grenzflächen in engen Gefäßen und ein Abtasten von Gegenständen mit stark strukturierter Oberfläche begünstigt.

Gemäß einer Ausgestaltung wird das Licht der mindestens einen Lichtquelle über einen Strahlteiler der Einrichtung zum Abbilden der mindestens einen Lichtquelle auf die mindestens eine Beleuchtungsstelle zugeführt und bildet dieselbe Einrichtung zum Abbilden die mindestens eine Beleuchtungsstelle über den Strahlteiler auf den mindestens einen Fotodetektor ab. Hierdurch wird eine Auflichtmessung ermöglicht. Da nur eine Einrichtung zum Abbilden vorhanden ist, ist der Aufwand verhältnismäßig klein.

Gemäß einer Ausgestaltung weist die mindestens eine Einrichtung zum Abbilden der mindestens einen Lichtquelle und/oder die mindestens eine Einrichtung zum Abbilden der mindestens einen Beleuchtungsstelle eine Linse und/oder mehrere nebeneinander angeordnete Linsen und/oder ein Linsenarray und/oder eine Stufenlinse auf. Mehrere quer zur Achse der Einrichtung zum Abbilden nebeneinander angeordneter Linsen, das Linsenarray und die Stufenlinse werden insbesondere zum Abbilden mehrerer Lichtquellen oder virtueller Lichtquellen auf mindestens eine Beleuchtungsstelle und/oder zum Abbilden mindestens einer Beleuchtungsstelle auf mehrere Fotodetektoren herangezogen.

Gemäß einer Ausgestaltung hat die Auswerteeinrichtung Mittel zum Filtern des von dem mindestens einen Fotodetektor gelieferten Meßsignals. Hierdurch können Rauschanteile des Meßsignals unterdrückt und Fremdlichteinflüsse und andere Störungen ausgeschaltet werden. Hierfür werden beispielsweise die beim vertikalen Verfahren der mindestens einen Beleuchtungsstelle von den Fotodetektoren gelieferten Meßsignale abgeleitet und die Grenzfläche an der Stelle ermittelt, an dem die Ableitung den Wert Null annimmt. Weitere Auswerteverfahren (z.B. logarithmisch, Integration höherer Ordnung) zum Herausfiltern der Rauschsignale aus dem Meßsignal stehen zur Verfügung. Durch das Filtern der Meßsignale wird die Empfindlichkeit des optischen Sensorsystems und die Schnelligkeit der Detektion von Grenzflächen mittels des optischen Sensorsystems gesteigert.

Gemäß einer Ausgestaltung ist eine Verstelleinrichtung zum Verstellen der relativen Lage der mindestens einen Beleuchtungsstelle und der Grenzfläche in Richtung der optischen Achse des mindestens einen abbildenden Systems und/oder quer dazu vorhanden, um mindestens eine Beleuchtungsstelle auf einer optimalen Reflexionsstelle zu positionieren. Gemäß einer weiteren Ausgestaltung ist mittels der Verstelleinrichtung die relative Lage der von der Einrichtung zum Projizieren, dem abbildenden System und dem mindestens einen Fotodetektor gebildeten Optik und der Grenzfläche verstellbar. Dafür kann das optischen Sensorsystem, z.B. mittels einer horizontal und vertikal (in Richtung der X-, Y- und Z-Achse) verfahrbaren Transporteinrichtung und/oder die Grenzfläche, z.B. mittels eines Objektträgers, verlagerbar sein.

Für das Verstellen in Richtung der optischen Achse des mindestens einen abbildenden Systems hat die Verstelleinrichtung gemäß einer weiteren Ausgestaltung ein Zoom-Objektiv und/oder Autofokus-System im abbildenden System. Die Verstellung quer zur optischen Achse kann die Verstelleinrichtung mindestens einen Scan-Spiegel im abbildenden System haben.

Gemäß einer Ausgestaltung ist die Verstelleinrichtung motorgetrieben, z.B. für eine Integration in eine automatische Vorrichtung zur Behandlung von Flüssigkeiten.

Gemäß einer Ausgestaltung steuert die Auswerteeinrichtung das Verstellen der relativen Lage der mindestens einen Beleuchtungsstelle und der Grenzfläche durch die Verstelleinrichtung. Die Auswerteeinrichtung kann das Verstellen in Abhängigkeit von den Meßsignalen vornehmen, um mindestens eine Beleuchtungsstelle auf die Grenzfläche einzustellen und/oder entlang der Grenzfläche zu verfahren.

Gemäß einer Ausgestaltung ermittelt die Auswerteeinrichtung die Lage und/oder die Identität von Grenzflächen bzw. der diese aufweisenden Flüssigkeiten oder Gegenstände. Die Identität von Flüssigkeiten und Gegenständen kann z.B. durch Abtasten ihrer Grenzflächen mit Licht bestimmter Wellenlängen und Vergleich der Meßsignale mit Referenzdaten ermittelt werden. Die Identität von Gegenständen kann durch Vergleich des durch Abtastung ermittelten Profils der Grenzfläche mit Referenzdaten ermittelt werden. Die Referenzdaten können gespeichert werden, z.B. nach Ermittlung durch vorherige Abtastung von Referenzflüssigkeiten bzw. Referenzgegenständen. Die Ergebnisse dieser Ermittlungen können zur automatischen Steuerung von Abläufen der Vorrichtung zur Behandlung von Flüssigkeiten verwendet werden.

Gemäß einer weiteren Ausgestaltung erfaßt die Auswerteeinrichtung die Lage und/oder Identität von Grenzflächen in Gefäßen (z.B. Reaktionsgefäßen oder Aufnahmen von Mikrotiterplatten) und/oder von Laborwaren (sog. "Labware", wie z.B. Reaktionsgefäße, Mikrotiterplatten, Pipettenspitzen) und/oder von Werkzeugen.

Gemäß einer Ausgestaltung ist das optische Sensorsystem an einer automatischen Vorrichtung zur Behandlung von Flüssigkeiten angeordnet.

Gemäß einer Ausgestaltung ist die Auswerteeinrichtung eine Auswerteeinrichtung zum Erfassen einer optisch abtastbaren Markierung von Gegenständen. Die optisch abtastbare Markierung ist beispielsweise ein auf einem Gegenstand angeordneter Barcode oder Strichcode oder eine codierte Anordnung von Löchern oder von Linien eines Rasters auf dem Gegenstand.

Das erfindungsgemäße Verfahren ermittelt die räumliche Lage der Grenzfläche in vertikaler Richtung (bzw. in Richtung der Z-Achse), d.h. in oder entgegen der Richtung der Erdgravitation. Eine Bestimmung der Lage in horizontaler Richtung (bzw. in Richtung der X- und Y-Achse) und die Zuordnung der optimalen Reflexionsstelle zu einer bestimmten Stelle auf der Grenzfläche kann entfallen. Hierdurch wird die Detektion des Flüssigkeitsspiegels beschleunigt.

Gemäß einer Ausgestaltung wird die Lage der mindestens einen Beleuchtungsstelle in Querrichtung zur Vertikalen verändert, falls beim Verändern des vertikalen Abstandes zwischen Beleuchtungsstelle und Grenzfläche kein Maximum des Meßsignals mindestens eines Fotodetektors ermittelt wird und wird danach erneut unter Veränderung des vertikalen Abstandes der mindestens einen Beleuchtungsstelle und der Grenzfläche nach einem Maximum des Meßsignals gesucht. Diese ergänzenden Schritte brauchen nur durchgeführt zu werden, wenn bei der ersten Veränderung des vertikalen Abstandes kein Maximum des Meßsignals ermittelt wird.

Bei einer Ausgestaltung des Verfahrens wird
- Licht in Richtung einer Grenzfläche auf mindestens eine Beleuchtungsstelle projiziert,
- die Verteilung der reflektierten Lichtmenge mittels mehrerer Fotodetektoren ermittelt und
- aufgrund der ermittelten Lichtmengenverteilung die wahrscheinliche Lage der optimalen Reflexionsstelle auf der Grenzfläche und/oder die wahrscheinliche Lage und/oder die wahrscheinliche Identität der Grenzfläche ermittelt.

Bei diesem Verfahren wird aus der Verteilung des reflektierten Lichts auf die wahrscheinliche Lage der Grenzfläche und/oder der optimalen Reflexionsstelle auf der Grenzfläche und/oder auf die wahrscheinliche Identität der Grenzfläche bzw. den diese aufweisende Flüssigkeit oder den diese aufweisenden Gegenstand geschlossen. Die von den mehreren Fotodetektoren gelieferten Meßsignale werden entsprechend ausgewertet. Die Information über die wahrscheinliche Lage bzw. die wahrscheinliche Identität reicht für manche Anwendungen aus, beispielsweise wenn lediglich ermittelt werden muß, ob ein Gefäß überhaupt Flüssigkeit enthält, ob ein Gegenstand am Ende eines Prozesses angelangt ist oder ob eine bestimmte Art von Gegenständen (z.B. eine Mikrotiterplatte mit 384 Aufnahmen) vorliegt. Die genaue Ermittlung der Lage bzw. die genaue Identifizierung der Grenzfläche kann gemäß einer Ausgestaltung in einem nachgeschalteten Schritt beschleunigt durchgeführt werden, weil bereits nach Auswertung weniger Meßsignale zielgerichtet gemessen werden kann. Hierfür wird gemäß einer Ausgestaltung die mindestens eine Beleuchtungsstelle auf die wahrscheinliche Lage der Grenzfläche bzw. der optimalen Reflexionsstelle eingestellt und die Messung wiederholt.

Bei einer Ausgestaltung des Verfahrens wird
- Licht auf mehrere Beleuchtungsstellen projiziert,
- die Beleuchtungsstellen über eine Grenzfläche verfahren,
- jede Beleuchtungsstelle auf einen dieser zugeordneten Fotodetektor abgebildet und
- die von den mehreren Fotodetektoren gelieferten Meßsignale verglichen und im Falle einer Abweichung ein Meßfehler festgestellt.

Bei diesem Verfahren wird die Oberfläche von Gegenständen mehrfach abgetastet und werden die Meßsignale herangezogen, um Meßfehler festzustellen. Die Feststellung von Meßfehlern kann Ausgangspunkt für eine erneute Abtastung der Grenzfläche des Gegenstandes sein. Eine Korrektur kann aber auch vorgenommen werden, indem die Meßsignale weitere Abtastungen, die in einem einzigen Arbeitsgang gewonnen werden, für die Korrektur einer fehlerhaften Messung herangezogen werden. Für dieses Verfahren können sämtliche Kanäle des optischen Sensorsystem herangezogen werden oder nur ein Teil davon. Es kann insbesondere zur Abtastung eines Barcodes, Strichcodes, einer codierten Anordnung von Löchern oder von Linien eines Rasters auf einem Gegenstand herangezogen werden. Das Verfahren ist aber auch zur Abtastung von Grenzflächen für eine Identifikation von Gegenständen geeignet.

Grundsätzlich kann das optische Sensorsystem auch zur Identifizierung bzw. zur Ermittlung der Lage von Gegenständen herangezogen werden, wenn nur ein Kanal des optischen Sensorsystems genutzt wird, d.h. indem mittels eines einzigen Lichtstrahles eine einzige Beleuchtungsstelle erzeugt wird, die auf einen einzigen Fotodetektor abgebildet wird. Das mehrkanalige optische Sensorsystem kann durch geeignete Maßnahmen auf ein einkanaliges optisches Sensorsystem umgeschaltet werden, z.B. durch Auslesen nur eines Fotodetektors und/oder durch Abdecken von Beleuchtungsstellen durch geeignete Blenden der Einrichtung zum Projizieren und/oder durch Abschalten von Lichtquellen. Das System ist dann in der Lage, über Horizontalbewegungen (in X- und Y-Richtung) der Verstelleinrichtung die Lage von Gegenständen im Raum zu erfassen.

Gemäß einer Ausgestaltung werden die ermittelten Lagen und/oder Identitäten von Grenzflächen gespeichert und/oder zur Steuerung und/oder zur Überprüfung eines Verfahrens zur Behandlung von Flüssigkeiten verwendet. Die ermittelten Werte können in Datenspeichern abgelegt und zur Bestimmung von Flüssigkeitsvolumina bzw. zur Bestimmung der Lage von Gegenständen herangezogen werden. Ferner können die gemäß den obigen Verfahren ermittelten Daten über ein Bussystem einer Steuereinrichtung zur Verfügung gestellt werden, die wiederum eine Vorrichtung zur Behandlung von Flüssigkeiten steuert.

Gemäß einer Ausgestaltung werden die Lagen und/oder Identitäten von Grenzflächen und/oder von Gegenständen zu Beginn eines Verfahrens zur Behandlung von Flüssigkeiten ermittelt und/oder im Verlauf eines Verfahrens zur Behandlung von Flüssigkeiten erneut ermittelt und/oder ausgehend von den ermittelten Lagen und/oder Identitäten Veränderungen der Zustände durch das Verfahren zur Behandlung von Flüssigkeiten errechnet. Mittels einer Pipettiereinrichtung können je nach Anforderung des Verfahrens zur Behandlung von Flüssigkeiten Flüssigkeitsvolumina aus bestimmten Gefäßen entnommen und auch zugegeben werden. Die Veränderungen der Volumina in jedem Gefäß können durch eine Steuereinrichtung berechnet und protokolliert und für die weiteren Schritte des Verfahrens zur Behandlung von Flüssigkeiten gespeichert werden. Eine erneute Ermittlung der Lage der Grenzflächen von Flüssigkeiten ist dann grundsätzlich nicht mehr notwendig. Ferner können über eine Greif- oder eine andere Transporteinrichtung gemäß dem Verfahren zur Behandlung von Flüssigkeiten Gegenstände bewegt werden. Auch hierbei ist es grundsätzlich nicht erforderlich, die neue Lage oder die Abwesenheit der Gegenstände an einen bestimmten Ort zu ermitteln, da die neue Lage berechnet werden kann. Grundsätzlich reicht es somit aus, mittels des optischen Sensorsystem die Zustände (Lagen und/oder Identitäten von Grenzflächen bzw. der diese aufweisenden Flüssigkeiten oder Gegenstände) am Anfang des Verfahrens zur Behandlung von Flüssigkeiten zu ermitteln, falls sie nicht vom Anwender vorgegeben werden.

Gemäß einer weiteren Ausgestaltung werden die errechneten Werte durch eine erneute Ermittlung der Lagen und/oder Identitäten überprüft. Bei jedem Zwischenstand des Verfahrens zur Behandlung von Flüssigkeiten können die vorher ausgeführten Befehle und Aktionen überprüft und die Werte bei diesem Zwischenstand gespeichert werden.

Gemäß einer weiteren Ausgestaltung werden die ermittelten und/oder errechneten Lagen und/oder Identitäten archiviert und/oder ausgegeben. Nach Abschluß eines Verfahrens ist eine Überprüfung aller ausgeführten Befehle bzw. Aktionen mittels des optischen Sensors zur Qualitätssicherung bzw. Validierung möglich. Die Ergebnisse können abgespeichert und/oder zur Archivierung und/oder Nachweisführung ausgegeben werden.

Die Erfindung wird nachfolgend mit Bezug auf die anliegenden Zeichnungen von Ausführungsbeispielen näher erläutert. In den Zeichnungen zeigen:
- Fig. 1: einen Lichtstrahl an einer optimalen Reflexionsstelle einer konkav gekrümmten Grenzfläche einer Flüssigkeit in einem Gefäß in einem Vertikalschnitt;
- Fig. 2: einen Lichtstrahl an einer optimalen Reflexionsstelle einer konvex gekrümmten Grenzfläche einer Flüssigkeit in einem Gefäß in einem Vertikalschnitt;
- Fig. 3: Lage einer idealen Reflexionsstelle der Grenzfläche einer Flüssigkeit in einem Gefäß in der Draufsicht;
- Fig. 4: Lage einer realen Reflexionsstelle der Grenzfläche einer Flüssigkeit in einem Gefäß in einer Draufsicht;
- Fig. 5: mehrere parallele Lichtstrahlen an einer konkav gekrümmten Grenzfläche einer Flüssigkeit in einem Gefäß in einem Vertikalschnitt;
- Fig. 6: mehrere parallele Lichtstrahlen an einer konvex gekrümmten Grenzfläche einer Flüssigkeit in einem Gefäß in einem Vertikalschnitt;
- Fig. 7: Abtasten der realen Grenzfläche einer Flüssigkeit in einem Gefäß mittels mehrerer matrixartig angeordneter Lichtstrahlen in der Draufsicht;
- Fig. 8: optisches Sensorsystem mit mehreren Lichtquellen und mehreren Fotodetektoren in schematischer Seitenansicht;
- Fig. 9: optisches Sensorsystem mit mehreren virtuellen Lichtquellen und mehreren Fotodetektoren in schematischer Seitenansicht;
- Fig. 10: optisches Sensorsystem mit mehreren virtuellen Lichtquellen und einem Fotodetektor mit vorgeordneter Lichtzusammenführung in schematischer Seitenansicht;
- Fig. 11: optisches Sensorsystem mit mehreren Lichtquellen und einem Fotodetektor mit vorgeordneter Lichtzusammenführung in schematischer Seitenansicht;
- Fig. 12: optisches Sensorsystem mit einer Lichtquelle mit divergierenden Lichtstrahlen und mehreren Fotodetektoren mit konvergierender Ausrichtung in schematischer Seitenansicht;
- Fig. 13: optisches Sensorsystem mit auf geneigte Grenzflächen gerichteten divergierenden Lichtstrahlen und mehreren parallelen Fotodetektoren in schematischer Seitenansicht;
- Fig. 14: optisches Sensorsystem mit mehreren Lichtquellen mit unter verschiedenen Winkeln auf einen gemeinsamen Beleuchtungspunkt gerichteten Lichtstrahlen und mehreren darauf ausgerichteten Fotodetektoren in schematischer Seitenansicht;
- Fig. 15: Blockschaltbild eines optischen Sensorsystems gemäß Fig. 10;
- Fig. 16: beispielhafte Anordnung von Mikrotiterplatten in einer Vorrichtung zur Behandlung von Flüssigkeiten mit einem optischen Sensorsystem insbesondere für Lageerkennung und Identifizierung von Labware in der Draufsicht;
- Fig. 17: beispielhafte Anordnung von Laborwaren in einer Vorrichtung zur Behandlung von Flüssigkeiten mit einem optischen Sensorsystem insbesondere für Lageerkennung und Identifizierung von Laborwaren;
- Fig. 18: optisches Sensorsystem beim Abtasten eines Barcodes in einer schematischen Seitenansicht.

Bei der nachfolgenden Beschreibung sind übereinstimmende Teile verschiedener Ausführungsbeispiele mit denselben Bezugsziffern bezeichnet.

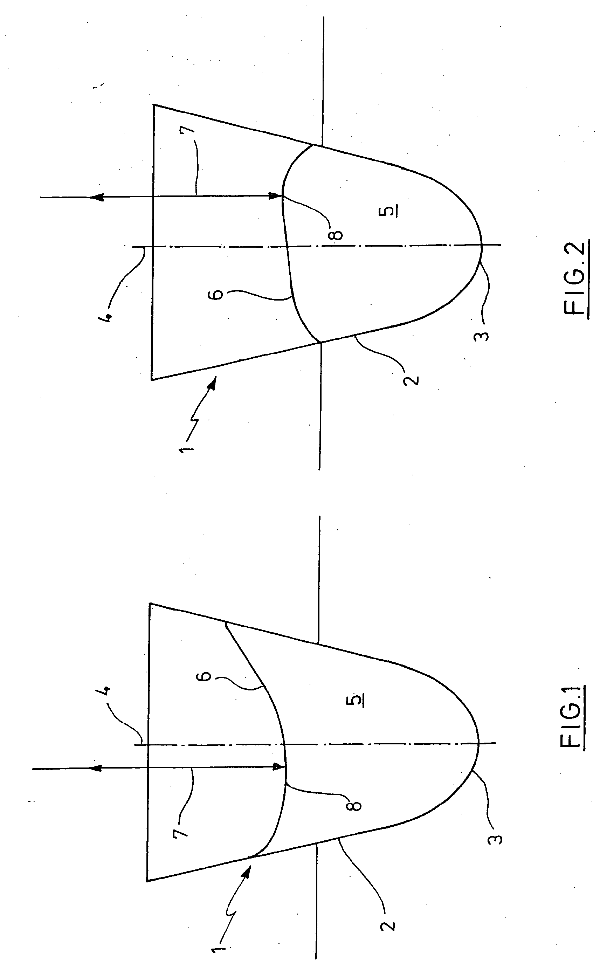

Die Fig. 1 bis 7 zeigen Beispiele für die Ausbildung des Flüssigkeitsspiegels in einem Reaktionsgefäß mit einem Fassungsvermögen im Bereich von einem Bruchteil eines Milliliters bis zu einigen Millilitern. Derartige Reaktionsgefäße werden z.B. von der Anmelderin unter der Bezeichnung "Eppendorf Röhrchen" bzw. "Eppendorf Tubes" vermarktet.

Die Gefäße 1 sind im unteren Bereich 2 konisch und haben einen innen konkav gewölbten Gefäßboden 3. Die Gefäße 1 sind mit ihrer Achse 4 vertikal ausgerichtet.

Gemäß Fig. 1 hat eine im Gefäß 1 angeordnete Flüssigkeit 5 einen konkav gekrümmten "Meniskus" bzw. Grenzfläche 6.

Ein parallel zur Gefäßachse 4 auf die Grenzfläche 6 gerichteter Lichtstrahl 7 trifft in einer optimalen Reflexionsstelle 8 senkrecht auf die Grenzfläche 6. Aus der optimalen Reflexionsstelle 8 wird er parallel zur Gefäßachse 4 reflektiert. Eine Vorrichtung zum Erfassen von Grenzflächen gemäß Fig. 1 der EP 1 288 635 A2 kann bei Ausrichtung des Lichtstrahles auf die optimale Reflexionsstelle 8 die Lage der Grenzfläche 6 ermitteln.

Fig. 2 zeigt die optimale Reflexionsstelle 8 an einer konvex gekrümmten Grenzfläche 6 in dem Gefäß 1.

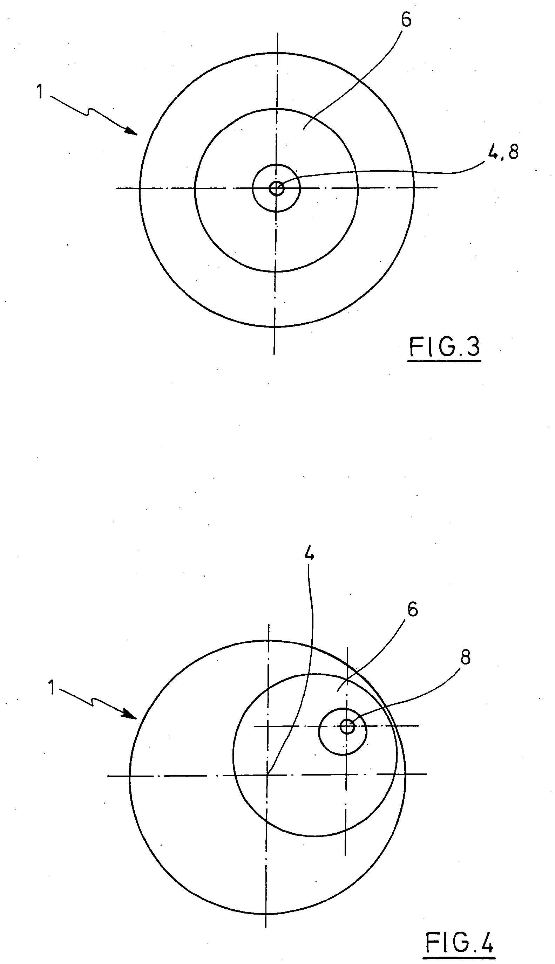

Gemäß Fig. 3 ist die optimale Reflexionsstelle 8 im Idealfall auf der Mittelachse 4 des Gefäßes 1 angeordnet. Wenn die Lage des Gefäßes 1 bekannt ist, kann der Füllstand mittels der Vorrichtung zum Erfassen von Grenzflächen gemäß EP 1 288 635 A2 leicht bestimmt werden. Gemäß Fig. 4 ist die optimale Reflexionsstelle 8 real außermittig angeordnet. Ein Sensorsystem gemäß EP 1 288 635 A2 muß vertikal und horizontal verfahren werden, um die optimale Reflexionsstelle 8 zu finden.

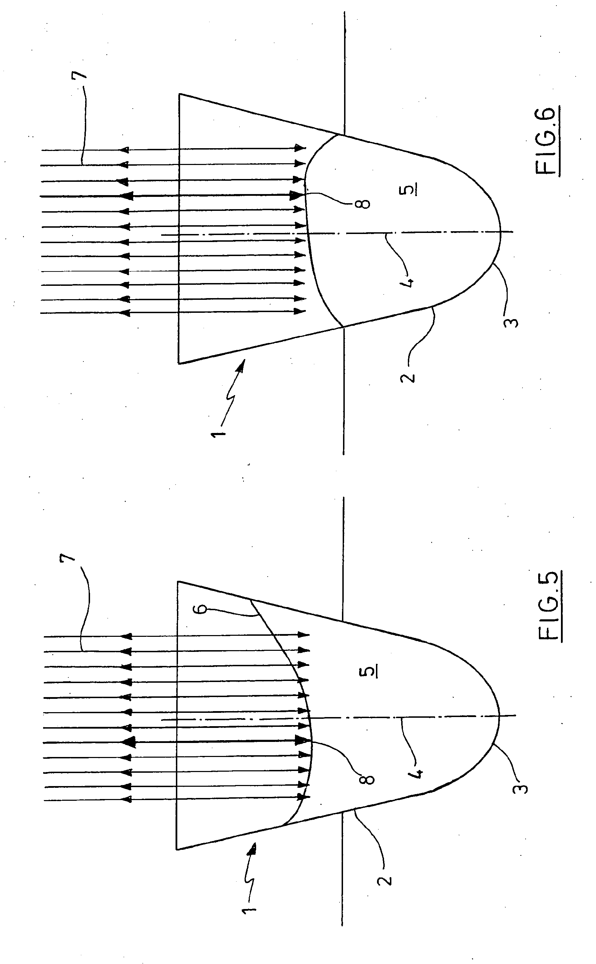

Erfindungsgemäß werden entsprechend Fig. 5 und 6 mehrere parallele Lichtstrahlen 7 auf die Grenzfläche 6 im Gefäß 1 gerichtet. Jeweils einer der parallelen Lichtstrahlen 7 trifft auf die optimale Reflexionsstelle 8. Das reflektierte Licht ist somit mittels eines nicht gezeigten Fotodetektors detektierbar, der auf das reflektierte Licht ausgerichtet ist.

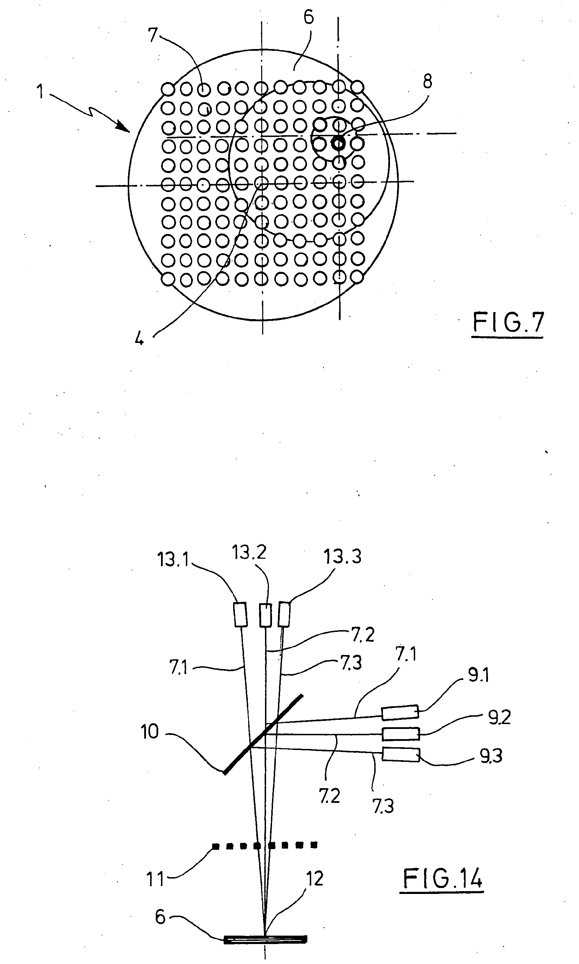

Fig. 7 veranschaulicht das Auffinden der optimalen Reflexionsstelle 8 mittels einer matrixartigen Anordnung von Lichtstrahlen 7 an einer realen Grenzfläche 6 entsprechend Fig. 4. Die optimale Reflexionsstelle 8 ist grundsätzlich in einem einzigen Abtastvorgang auffindbar. Gegebenenfalls muß eine Einrichtung zum Projizieren der Lichtstrahlen 7 in der Vertikalen (senkrecht zur Zeichenebene) verfahren werden, um einen Lichtstrahl 7 an der optimalen Reflexionsstelle 8 auf der Grenzfläche 6 zu fokussieren.

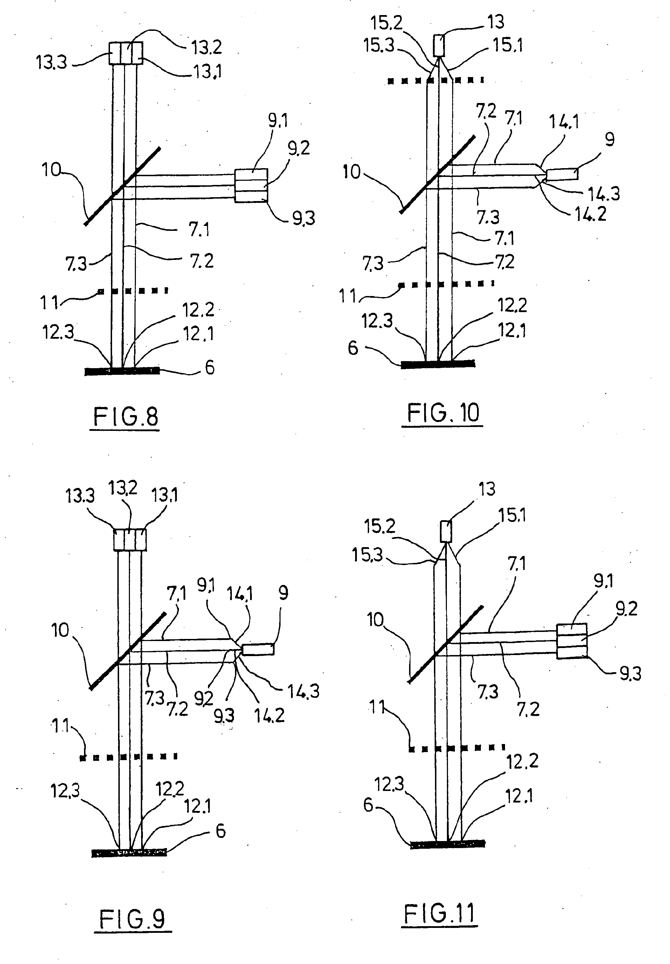

Mehrere Lichtstrahlen 7 zum Abtasten der Grenzfläche 6 können auf verschiedene Weisen erzeugt werden. Nachfolgend sind hierfür einige Beispiele erläutert:
Gemäß Fig. 8 sind parallele Lichtstrahlen 7.1, 7.2, 7.3 aus parallelen Lichtquellen 9.1, 9.2, 9.3 auf einen Strahlteiler 10 gerichtet. Vom Strahlteiler 10 werden die Lichtstrahlen 7.1, 7.2, 7.3 auf ein Linsenarray 11 reflektiert. Das Linsenarray 11 hat eine Vielzahl nebeneinander angeordneter Linsen, wobei jedem Lichtstrahl 7.1, 7.2, 7.3 eine Linse zugeordnet ist. Durch das Linsenarray 11 werden die Lichtstrahlen 7.1, 7.2, 7.3 auf rasterartig angeordnete Beleuchtungsstellen 12.1, 12.2, 12.3 fokussiert.

Im Beispiel treffen sämtliche Lichtstrahlen 7.1, 7.2, 7.3 senkrecht auf eine reflektierende Grenzfläche 6, so daß das Licht in Richtung der einfallenden Lichtstrahlen 7.1, 7.2, 7.3 reflektiert wird. Das reflektierte Licht wird durch das Linsenarray 11 und den Strahlenteiler 10 auf parallele Fotodetektoren 13.1, 13.2, 13.3 abgebildet.

Das Linsenarray 11 fokussiert die Lichtstrahlen 7.1, 7.2, 7.3 auf Beleuchtungsstellen 12.1, 12.2, 12.3 und das aus den Beleuchtungsstellen reflektierte Licht auf die Fotodetektoren 13.1, 13.2, 13.3. Wenn sich die Beleuchtungsstellen 12.1, 12.2, 12.3 auf der Grenzfläche 6 befinden, ist die von den Fototdetektoren 13.1, 13.2, 13.3 empfangene Lichtmenge maximal. Die Meßsignale der Fotodetektoren 13.1, 13.2, 13.3 zeigen damit an, daß sich die Beleuchtungsstellen 12.1, 12.2, 12.3 auf der Grenzfläche 6 befinden. Damit ist der Abstand der Grenzfläche 6 vom optischen Sensorsystem bekannt.

In Fig. 8 ist die Grenzfläche 6 eben. Bei einer unebenen Grenzfläche 6 trifft nur ein senkrecht auf einen Bereich dieser Grenzfläche auftreffender Lichtstrahl 7.1 oder 7.2 oder 7.3 auf die optimale Reflexionsstelle 8. Das reflektierte Licht wird vom Fotodetektor 13.1 oder 13.2 oder 13.3 empfangen, auf den die betreffende Beleuchtungsstelle 12.1 oder 12.2 oder 12.3 abgebildet wird. Das Meßsignal dieses Fotodetektors 13.1 oder 13.2 oder 13.3 indiziert das Auffinden der optimalen Reflexionsstelle 8, so daß der Abstand der Grenzfläche 6 vom optischen Sensorsystem auf einer nicht planen Grenzfläche 6 feststellbar ist.

Das optische Sensorsystem von Fig. 9 weist nur eine einzige Lichtquelle 9 auf. Das Licht dieser Lichtquelle wird über einen sich auffächernden Lichtleiter 14.1, 14.2, 14.3 auf mehrere virtuelle Lichtquellen 9.1, 9.2, 9.3 aufgeteilt. Die davon ausgehenden Lichtstrahlen 7.1, 7.2, 7.3 werden wiederum in der bereits beschriebenen Weise über eine Anordnung aus Strahlteiler 10 und Linsenarray 11 auf Beleuchtungsstellen 12.1, 12.2, 12.3 fokussiert. Die aus optimalen Beleuchtungsstellen reflektierten Lichtstrahlen werden auf parallele Fotodetektoren 13.1, 13.2, 13.3 abgebildet.

Das optische Sensorsystem von Fig. 10 unterscheidet sich von dem Vorbeschriebenen dadurch, daß es nur einen Fotodetektor 12 aufweist. Dem Fotodetektor 12 vorgeordnet sind sich vereinigende bzw. miteinander verschmelzende Lichtleiter 15.1, 15.2, 15.3. Die aufgefächerten Enden der Lichtleiter 15.1, 15.2, 15.3 sind jeweils einem Lichtstrahl 7.1, 7.2, 7.3 zugeordnet. Das aus den Beleuchtungsstellen 12.1, 12.2, 12.3 in Richtung der einfallenden Lichtstrahlen 7.1, 7.2, 7.3 reflektierte Licht wird auf die Eingänge der Lichtleiter 15.1, 15.2, 15.3 abgebildet. Das dort eintreffende Licht wird gebündelt dem Fotodetektor 13 zugeführt. Die Anordnung einer optimalen Reflexionsstelle 8 der Grenzfläche 6 in mindestens einer Beleuchtungsstelle 12.1, 12.2, 12.3 zeigt sich in einem erhöhten Meßsignal des Fotodetektors 13.

Das optische Sensorsystem gemäß Fig. 11 kombiniert die mehreren Lichtquellen 9.1, 9.2, 9.3 des optischen Sensorsystems von Fig. 8 mit sich vereinigenden Lichtleitern 15.1, 15.2, 15.3 und einem nachgeordneten Fotodetektor 13 von Fig. 10. Die virtuellen Lichtquellen von Fig. 10 sind also durch tatsächliche Lichtquellen 9.1, 9.2, 9.3 ersetzt. Falls zumindest eine Beleuchtungsstelle 12.1, 12.2, 12.3 auf eine optimale Reflexionsstelle 8 einer Grenzfläche 6 trifft, zeigt sich das in einem Anstieg des vom Fotodetektor 13 gelieferten Meßsignals.

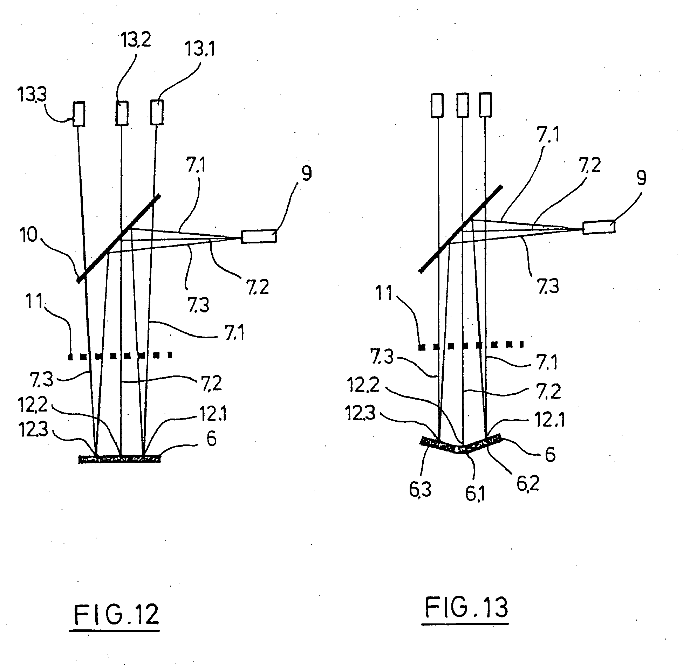

Bei der Anordnung von Fig. 12 liefert eine Lichtquelle 9 divergierende Lichtstrahlen 7.1, 7.2, 7.3, die vom Strahlteiler 10 reflektiert und über ein Linsenarray 11 auf Beleuchtungsstellen 12.1, 12.2, 12.3 fokussiert werden. Sämtliche Beleuchtungsstellen 12.1, 12.2, 12.3 treffen auf eine ebene Grenzfläche 6. Die von dort reflektierten Lichtstrahlen 7.1, 7.2, 7.3 werden durch das Linsenarray 11 und den Strahlteiler 10 auf Fotodetektoren 13.1, 13.2, 13.3 abgebildet. Falls nur ein Bereich der Grenzfläche 6 eben ist, wird nur der dort auftreffende Lichtstrahl 7.1 oder 7.2 oder 7.3 zum zugeordneten Fotodetektor 13.1 oder 13.2 oder 13.3 reflektiert. Infolgedessen ist am Anstieg des Meßsignals zumindest eines Fotodetektors 13.1, 13.2, 13.3 erkennbar, daß sich die Grenzfläche 6 in einer Beleuchtungsstelle 12.1, 12.2, 12.3 befindet.

Die Ausführung von Fig. 13 unterscheidet sich von der vorbeschriebenen dadurch, daß sich sämtliche Fotodetektoren 13.1, 13.2, 13.3 auf Lichtstrahlen 7.1, 7.2, 7.3 befinden, die parallel von einer Grenzfläche 6 reflektiert werden. Da die Lichtquelle 9 divergierende Lichtstrahlen 7.1, 7.2, 7.3 abgibt, werden sie nur von einer Grenzfläche 6 mit einem planen Zentralbereich 6.1 und zwei entgegengesetzt geneigten Randbereichen 6.2, 6.3 auf die zugeordneten Fotodetektoren 13.1, 13.2, 13.3 reflektiert. Die Form der Grenzfläche 6 entspricht etwa der Form eines konkaven Meniskus, der vielfach von der Oberfläche einer Flüssigkeit in einem Gefäß gebildet wird. Diese Anordnung ist deshalb besonders zur Detektion von Flüssigkeitsspiegeln in Gefäßen geeignet. Anhand des Anstieges der Summe der Meßsignale der Fotodetektoren 13.1, 13.2, 13.3 ist die Anordnung der Beleuchtungsstellen 12.1, 12.2, 12.3 auf der Grenzfläche 6.1, 6.2, 6.3 besonders gut erkennbar.

Das optische Sensorsystem von Fig. 14 hat Lichtquellen 9.1, 9.2, 9.3, deren Lichtstrahlen 7.1, 7.2, 7.3 konvergieren, so daß sie nach Reflexion durch einen Strahlteiler 10 und Bündelung durch ein Linsenarray 11 in einer gemeinsamen Beleuchtungsstelle 12 zusammentreffen. Fotodetektoren 13.1, 13.2, 13.3 sind auf den Lichtstrahlen 7.1, 7.2, 7.3 angeordnet, die von einer planen Grenzfläche 6, die senkrecht zur Achse des Linsenarrays 11 ausgerichtet ist, reflektiert werden. Die Anordnung einer optimalen Reflexionsstelle in der Beleuchtungsstelle zeigt sich an dem Anstieg der Meßsignale sämtlicher Fotodetektoren 13.1, 13.2, 13.3. Falls nur einer der einfallenden Lichtstrahlen 7.1 oder 7.2 oder 7.3 auf einen Fotodetektor 13.1 oder 13.2 oder 13.3 reflektiert wird, zeigt sich dies in einem Anstieg des Meßsignals des betreffenden Fotodetektors. Deshalb erleichtert auch dieses optische Sensorsystem das Auffinden einer optimalen Reflexionsstelle.

Treffen die Beleuchtungsstellen 12.1, 12.2, 12.3 der vorbeschriebenen optischen Sensorsysteme nicht auf eine optimale Reflexionsstelle 8 einer Grenzfläche 6, so kann durch Verlagern der optischen Sensorsysteme bezüglich der Grenzfläche 6 erreicht werden, daß eine Beleuchtungsstelle auf eine optimale Reflexionsstelle 8 trifft und damit die Lage der Grenzfläche 6 feststellbar ist.

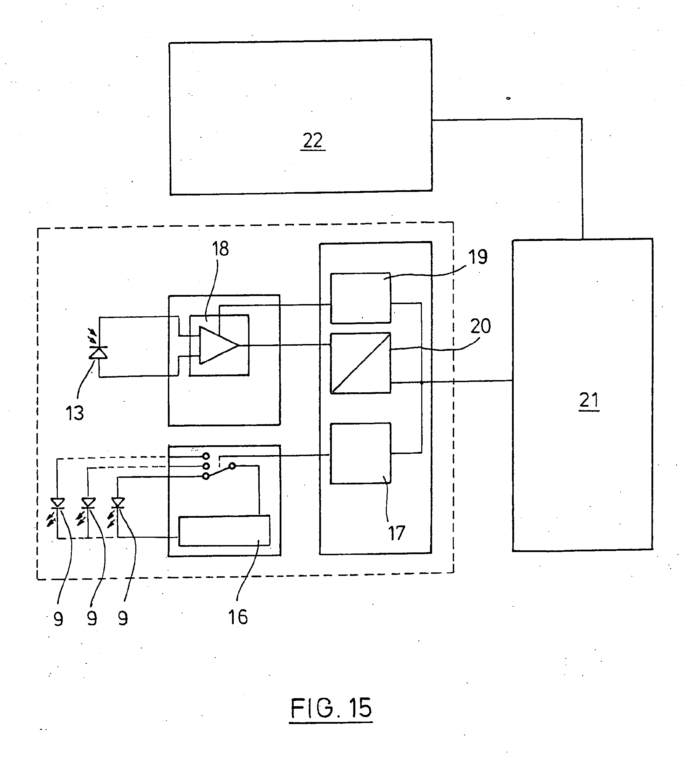

Gemäß Fig. 15 hat ein optisches Sensorsystem eine Spannungsversorgung 16 für mehrere Lichtquellen 9, die verschiedene Wellenlängen haben. Gesteuert werden die Lichtquellen 9 von einer Lichtsteuereinrichtung 17. Mittels der Lichtsteuereinrichtung 17 ist gezielt eine der verschiedenen Lichtquellen 9 einschaltbar, wobei die beste Wellenlänge für die Detektion einer bestimmten Grenzfläche gewählt werden kann.

Das Meßsignal eines Fotodetektors 13 wird über einen Verstärker 18 mit einer Verstärkungsregelung 19 einem Rauschfilter 20 zugeführt. Das gefilterte Meßsignal wird nach Digitalisierung mittels eines nicht gezeigten A/D-Wandlers einer Auswerteeinrichtung in Form eines Computers 21 zugeführt, der die Meßsignale auswertet. In Abhängigkeit von den Meßsignalen steuert der Computer 21 eine Verstelleinrichtung 22 zum Verstellen des optischen Sensorsystems bezüglich einer Grenzfläche in Horizontal(X-Y-) und Vertikal(Z-)Richtung.

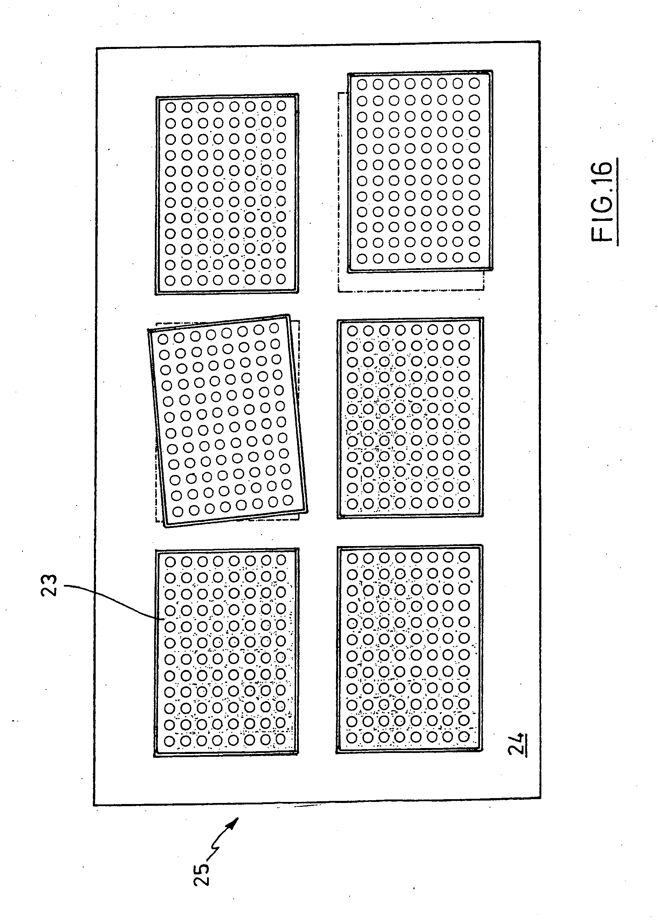

Gemäß Fig. 16 kann ein optisches Sensorssystem die Lage von Mikrotiterplatten 23 im Arbeitsbereich 24 einer Vorrichtung zur Behandlung von Flüssigkeiten 25 feststellen. Eine Verschwenkung, eine Parallelverschiebung oder eine anderweitige Fehlanordnung einer Mikrotiterplatte 23 gegenüber einer zugedachten Position wird mit Hilfe des optischen Sensorsystems erkannt. Sie kann bei der Bearbeitung von Flüssigkeiten in den Aufnahmen der Mikrotiterplatten 23 und/oder bei einem Transport der Mikrotiterplatten 23 berücksichtigt bzw. korrigiert werden.

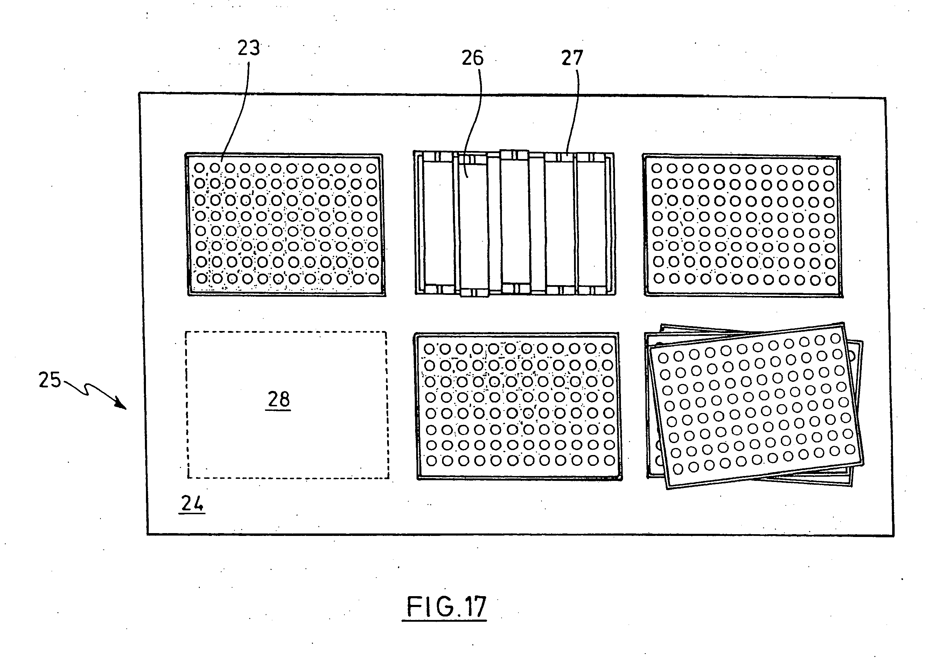

Gemäß Fig. 17 wird mit Hilfe eines optischen Sensorsystems die Lage von Mikrotiterplatten 23 und Vorlagegefäßen 26 in einem Gestell 27 und das Fehlen einer Mikrotiterplatte an einer dieser zugedachten Position 28 festgestellt. Der ermittelte Zustand der Laborwaren im Arbeitsbereich 24 der Vorrichtung zur Behandlung von Flüssigkeiten 25 wird bei den weiteren Behandlungsschritten berücksichtigt.

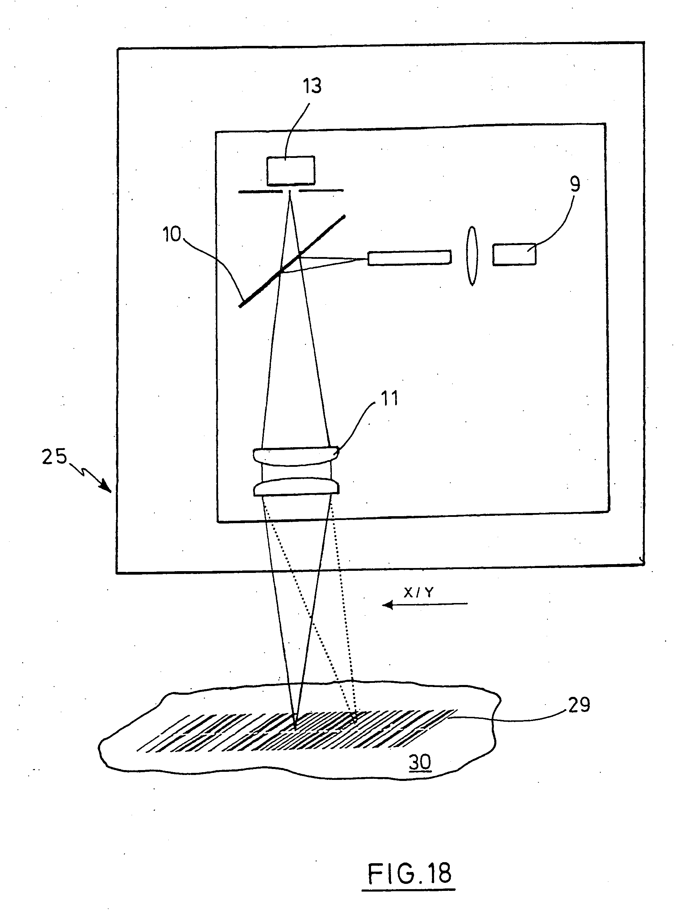

Fig. 18 zeigt ein optisches Sensorsystem, bei dem zum Abtasten eines Barcodes nur eine Lichtquelle 9 und nur ein Fotodetektor 13 eingeschaltet ist, so daß die Meßanordnung dem Ausführungsbeispiel gemäß EP 1 288 635 A2 entspricht. Mittels der Meßanordnung wird ein Barcode 29 auf einem Gegenstand 30 abgetastet, um diesen zu identifizieren. Zur Überprüfung der Abtastung kann durch Aktivierung einer - nicht gezeigten - zweiten Lichtquelle 9 und eines - nicht gezeigten - zweiten Fotodetektors eine gleichzeitige Messung vorgenommen werden. Hierfür wird das optische Sensorsystem in Horizontalrichtung bezüglich des Barcodes 29 verfahren.

## Patentansprüche

1. Verfahren zur Ermittlung der Lage einer Grenzfläche einer Flüssigkeit in einem Gefäß, mit den folgenden Schritten:
• Projizieren von Licht auf mindestens eine Beleuchtungsstelle,
• Abbilden der mindestens einen Beleuchtungsstelle auf mindestens einen Fotodetektor,
• Verändern des vertikalen Abstands der mindestens einen Beleuchtungsstelle und der Grenzfläche im Gefäß,
• Ermitteln des Maximums des Messsignals des mindestens einen Fotodetektors beim Verändern des vertikalen Abstands,
• Bestimmen der Lage der Beleuchtungsstelle beim Maximum des Messsignals als Lage der Grenzfläche
**gekennzeichnet durch**:
• Projizieren von Licht mindestens einer Lichtquelle gleichzeitig auf mehrere punktförmige Beleuchtungsstellen, die verschiedene Positionen im Raum haben, wobei die Beleuchtungsstellen eine dreidimensionale Anordnung oder eine Anordnung in einer Fläche haben,
• Ermitteln des Maximums des Messsignals mindestens eines Fotodetektors beim Verändern des vertikalen Abstandes zwischen den mehreren punktförmigen Beleuchtungsstellen und der Grenzfläche.

2. Verfahren zur Ermittlung der Lage einer Grenzfläche einer Flüssigkeit in einem Gefäß, mit den folgenden Schritten:
• Projizieren von Licht auf mindestens eine Beleuchtungsstelle,
• Abbilden der mindestens einen Beleuchtungsstelle auf mindestens einen Fotodetektor,
• Verändern des vertikalen Abstands der mindestens einen Beleuchtungsstelle und der Grenzfläche im Gefäß,
• Ermitteln des Maximums des Messsignals des mindestens einen Fotodetektors beim Verändern des vertikalen Abstands,
• Bestimmen der Lage der Beleuchtungsstelle beim Maximum des Messsignals als Lage der Grenzfläche
**gekennzeichnet durch**:
• auf mindestens eine punktförmige Beleuchtungsstelle wird Licht mehrerer Lichtquellen unter verschiedenen Winkeln projiziert,
• Ermitteln des Maximums des Messsignals mindestens eines Fotodetektors beim Verändern des vertikalen Abstandes zwischen der mindestens einen punktförmigen Beleuchtungsstelle und der Grenzfläche.

3. Verfahren zur Ermittlung der Lage einer Grenzfläche einer Flüssigkeit in einem Gefäß, mit den folgenden Schritten:
• Projizieren von Licht auf mindestens eine Beleuchtungsstelle,
• Abbilden der mindestens einen Beleuchtungsstelle auf mindestens einen Photodetektor,
• Verändern des vertikalen Abstands der mindestens einen Beleuchtungsstelle und der Grenzfläche im Gefäß,
• Ermitteln des Maximums des Messsignals des mindestens einen Fotodetektors beim Verändern des vertikalen Abstands,
• Bestimmen der Lage der Beleuchtungsstelle beim Maximum des Messsignals als Lage der Grenzfläche
**gekennzeichnet durch**:
• die mindestens eine punktförmige Beleuchtungsstelle wird auf mehrere Fotodetektoren, die verschiedene Positionen im Raum haben, abgebildet,
• Ermitteln des Maximums des Messsignals der Fotodetektoren beim Verändern des vertikalen Abstandes zwischen der mindestens einen punktförmigen Beleuchtungsstelle und der Grenzfläche.

4. Verfahren nach einem der Ansprüche 1 bis 3, bei dem die Lage der mindestens einen Beleuchtungsstelle in Querrichtung zur Vertikalen verändert wird, falls beim Verändern des vertikalen Abstandes zwischen Beleuchtungsstelle und Grenzfläche kein Maximum des Meßsignals mindestens eines Fotodetektors ermittelt wird und danach erneut unter Veränderung des vertikalen Abstands der mindestens einen Beleuchtungsstelle und der Grenzfläche nach einem Maximum des Meßsignals gesucht wird.

5. Verfahren nach einem der Ansprüche 1 bis 4, bei dem die ermittelten Lagen von Grenzflächen gespeichert und/oder zur Steuerung und/oder zur Überprüfung eines Verfahrens zur Behandlung von Flüssigkeiten verwendet werden.

6. Verfahren nach einem der Ansprüche 1 bis 5 zum Betreiben eines optischen Sensorsystems mit einer Verstelleinrichtung (22) zum Verstellen der relativen Lage der mindestens einen Beleuchtungsstelle (12) und der Grenzfläche (6) in Richtung der optischen Achse des mindestens einen abbildenden Systems (11) und/oder quer dazu.

7. Verfahren nach einem der Ansprüche 1 bis 6 zum Betreiben eines optischen Sensorsystems, bei dem Einrichtung zum Projizieren (9, 10, 11) eine Einrichtung zum Aufteilen (14) des Lichts einer Lichtquelle auf mehrere virtuelle Lichtquellen und mindestens eine Einrichtung zum Abbilden (11) der mehreren virtuellen Lichtquellen auf mindestens eine Beleuchtungsstelle (12) aufweist und/oder bei dem die Einrichtung zum Projizieren (9, 10, 11) mehrere Lichtquellen (9) und mindestens eine Einrichtung zum Abbilden (11) der mehreren Lichtquellen auf mindestens eine Beleuchtungsstelle (12) aufweist.

8. Verfahren nach einem der Ansprüche 1 bis 7 zum Betreiben eines optischen Sensorsystems mit mindestens einer Lichtquelle, bei dem die mindestens eine Lichtquelle (9) Licht mit einer Wellenlänge abgibt, das in besonders starkem Maße von einer zu detektierenden Grenzfläche (6) reflektiert wird und/oder bei dem die Einrichtung zum Projizieren (9, 10, 11) mehrere gesondert schaltbare Lichtquellen (9) mit verschiedener Wellenlänge aufweist und/oder eine Lichtquelle (9) mit einstellbarer Wellenlänge aufweist.

9. Verfahren nach einem der Ansprüche 1 bis 8 zum Betreiben eines optischen Sensorsystems, bei dem die Beleuchtungsstellen (12) in einer Ebene angeordnet sind und/oder bei dem die Beleuchtungsstellen (12) in einer konvexen oder konkaven Fläche oder in zueinander geneigten Flächen angeordnet sind.

## Claims

1. A method for detecting the position of an interface of a liquid in a vessel comprising the following steps:
• projecting light onto at least one illumination position,
• imaging the at least one illumination position onto at least one photodetector,
• varying the vertical distance between the at least one illumination position and the interface in the vessel,
• detecting the maximum value of the measurement signal of the at least one photodetector when the vertical distance is varied,
• determining the position of the illumination position at the maximum value of the measurement signal as the position of the interface,
**characterized by**:
• projecting light from at least one light source simultaneously onto plural point-shaped illumination positions having different positions in space, the illumination positions having a three-dimensional arrangement or an arrangement in a plane,
• determining the maximum value of the measurement signal of at least one photodetector when the vertical distance between the plural point-shaped illumination-positions and the interface is varied.

2. A method for detecting the position of an interface of a liquid in a vessel comprising the following steps:
• projecting light onto at least one illumination position,
• imaging the at least one illumination position onto at least one photodetector,
• varying the vertical distance between the at least one illumination position and the interface in the vessel,
• detecting the maximum value of the measurement signal of the at least one photodetector when the vertical distance is varied,
• determining the position of the illumination position at the maximum value of the measurement signal as the position of the interface,
**characterized by**:
• light from different light sources is projected under different angles onto at least one point-shaped illumination position,
• detecting the maximum value of the measurement signal of at least one photodetector when the vertical distance between the at least one point-shaped illumination position and the interface is varied.

3. A method for detecting the position of an interface of a liquid in a vessel comprising the following steps:
• projecting light onto at least one illumination position,
• imaging the at least one illumination position onto at least one photodetector,
• varying the vertical distance between the at least one illumination position and the interface in the vessel,
• detecting the maximum value of the measurement signal of the at least one photodetector when the vertical distance is varied,
• determining the position of the illumination position at the maximum value of the measurement signal as the position of the interface,
**characterized by**:
• the at least one point-shaped illumination position is imaged onto plural photodetectors having different positions in space,
• determining the maximum value of the measurement signal of the photodetectors when the vertical distance between the at least one point-shaped illumination position and the interface is varied.

4. Method according to anyone of claims 1 to 3, wherein in the event that no maximum value of the measurement signal of at least one photodetector is detected when the vertical distance between illumination position and interface is varied the position of the at least one illumination position is varied in the direction transverse to the vertical, and thereafter is searched anew for a maximum value of the measurement signal through variation of the vertical distance of the at least one illumination position and the interface.

5. Method according to anyone of claims 1 to 4, wherein the determined positions of interfaces are memorized and/or are used for controlling and/or examining the process for treating liquids.

6. Method according to anyone of claims 1 to 5 for operating an optical sensor system with an adjustment device (22) for adjusting the relative position of the at least one illumination position (12) and the interface (6) in the direction of the optical axis of the at least one imaging system (11) and/or transversely to the same.

7. Method according to anyone of claims 1 to 6 for operating an optical sensor system, wherein the device for projecting (9, 10, 11) has a device for subdividing (14) the light source into plural virtual light sources, and at least one device for imaging (11) the plural virtual light sources to at least one illumination position (12), and/or wherein the device for projecting (9, 10, 11) has plural light sources (9) and at least one device for imaging (11) the plural light sources onto at least one illumination position (12).

8. Method according to anyone of claims 1 to 7 for operating an optical sensor system, wherein the at least one light source (9) emits light having a wavelength which is reflected in a particular high degree by an interface (6) which is to be detected, and/or wherein the device for projecting (9, 10, 11) has plural separately switchable light sources (9) with different wavelengths and/or has one light source (9) with adjustable wavelength.

9. Method according to anyone of claims 1 to 8 for operating an optical sensor system, wherein the illumination positions (12) are arranged in a flat area, and/or wherein the illumination positions are arranged in a convex or concave plane or in planes inclined towards each other.

## Revendications

1. Procédé de détermination de la position d'une surface limite d'un liquide dans un récipient, comprenant les étapes suivantes :
• projection de lumière sur au moins une zone d'éclairage,
• reproduction de l'au moins une zone d'éclairage sur au moins un photodétecteur,
• modification de la distance verticale entre l'au moins une zone d'éclairage et la surface limite dans le récipient,
• détermination du niveau maximum du signal de mesure de l'au moins un photodétecteur lors de la modification de la distance verticale,
• spécification de la position de la zone d'éclairage au niveau maximum du signal de mesure comme position de la surface limite,
**caractérisé par** :
• la projection de lumière d'au moins une source de lumière simultanément sur plusieurs zones d'éclairage en forme de points, lesquelles présentent des positions différentes, les zones d'éclairage présentant un agencement tridimensionnel ou un agencement surfacique,
• la détermination du niveau maximum du signal de mesure d'au moins un photodétecteur lors de la modification de la distance verticale entre les différentes zones d'éclairage en forme de points et la surface limite.

2. Procédé de détermination de la position d'une surface limite d'un liquide dans un récipient, comprenant les étapes suivantes :
• projection de lumière sur au moins une zone d'éclairage,
• reproduction de l'au moins une zone d'éclairage sur au moins un photodétecteur,
• modification de la distance verticale entre l'au moins une zone d'éclairage et la surface limite dans le récipient,
• détermination du niveau maximum du signal de mesure de l'au moins un photodétecteur lors de la modification de la distance verticale,
• spécification de la position de la zone d'éclairage au niveau maximum du signal de mesure comme position de la surface limite,
**caractérisé par** :
• la projection de lumière de plusieurs sources de lumière selon différents angles sur au moins une zone d'éclairage en forme de point,
• la spécification du niveau maximum du signal de mesure d'au moins un photodétecteur lors de la modification de la distance verticale entre l'au moins une zone d'éclairage en forme de point et la surface limite.

3. Procédé de détermination de la position d'une surface limite d'un liquide dans un récipient, comprenant les étapes suivantes :
• projection de lumière sur au moins une zone d'éclairage,
• reproduction de l'au moins une zone d'éclairage sur au moins un photodétecteur,
• modification de la distance verticale entre l'au moins une zone d'éclairage et la surface limite dans le récipient,
• détermination du niveau maximum du signal de mesure de l'au moins un photodétecteur lors de la modification de la distance verticale,
• spécification de la position de la zone d'éclairage au niveau maximum du signal de mesure comme position de la surface limite,
**caractérisé par** :
• la reproduction de l'au moins une zone d'éclairage en forme de point sur plusieurs photodétecteurs, lesquelles présentent différentes positions dans l'espace,
• la détermination du niveau maximum du signal de mesure des photodétecteurs lors de la modification de la distance verticale entre l'au moins une zone d'éclairage en forme de point et la surface limite.

4. Procédé selon l'une des revendications 1 à 3, dans lequel l'orientation de l'au moins une zone d'éclairage est modifiée dans une direction transversale à la verticale, si aucun niveau maximum du signal de mesure d'au moins un photodétecteur n'a été déterminé lors de la modification de la distance verticale entre la zone d'éclairage et la surface limite, et dans lequel un niveau maximum du signal de mesure est ensuite de nouveau recherché en modifiant la distance verticale entre l'au moins une zone d'éclairage et la surface limite.

5. Procédé selon l'une des revendications 1 à 4, dans lequel les orientations déterminées de surfaces limites sont enregistrées et/ou utilisées pour commander et/ou vérifier un procédé de traitement de liquides.

6. Procédé selon l'une des revendications 1 à 5 pour le fonctionnement d'un système de capteur optique avec un dispositif de déplacement (22) pour le déplacement de la position relative de l'au moins une zone d'éclairage (12) et de la surface limite (6) dans la direction vers l'axe optique de l'au moins un système d'imagerie (11) et/ou transversalement à celle-ci.

7. Procédé selon l'une des revendications 1 à 6 pour le fonctionnement du système de capteur optique, dans lequel le dispositif de projection (9, 10, 11) présente un dispositif de répartition (14) de la lumière d'une source de lumière sur plusieurs sources de lumière virtuelles et au moins un dispositif d'imagerie (11) de la pluralité de sources de lumière virtuelles sur au moins une zone d'éclairage (12) et/ou dans lequel le dispositif de projection (9, 10, 11) présente plusieurs sources de lumière (9) et au moins un dispositif d'imagerie (11) de la pluralité de sources de lumière sur au moins une zone d'éclairage (12).

8. Procédé selon l'une des revendications 1 à 7 pour le fonctionnement d'un système de capteur optique avec au moins une source de lumière, dans lequel l'au moins une source de lumière (9) émet de la lumière avec une longueur d'onde, laquelle est en particulier réfléchie dans une très forte mesure par une surface limite à détecter et/ou dans lequel le dispositif de projection (9, 10, 11) présente plusieurs sources de lumière (9) aptes à être commutées séparément avec différentes longueurs d'onde et/ou une source de lumière (9) avec une longueur d'onde réglable.

9. Procédé selon l'une des revendications 1 à 8 pour le fonctionnement d'un système de capteur optique, dans lequel les zones d'éclairage (12) sont disposées dans un plan et/ou dans lequel les zones d'éclairage (12) sont disposées sur une surface convexe ou concave ou sur des surfaces inclinées les unes par rapport aux autres.
